# EUROPEAN PATENT APPLICATION

(11) **EP 1 739 334 A1**
(43) Date of publication of application: **03.01.2007**
(21) Application number: 06013410.3
(22) Date of filing: 28.06.2006
(51) Int. Cl.: F16L 21/03

(54) **Joint for watertight connection of pipes or unions in low-pressure hydraulic systems, particularly for lines for disposal of wastewater of civil or industrial buildings**

(30) Priority: 30.06.2005 IT MI20051243
(71) Applicant: CO.E.S. Compagnia Edil Sanitaria S.p.A., 20096 Pioltello MI (IT)
(72) Inventor: Crenna, Dario, 21053 Castellanza (IT)
(74) Representative: Alagem Modiano, Lara S.

(57) **Abstract**

A joint (1) for the watertight connection of pipes or unions (3) in low-pressure hydraulic systems, particularly for lines for the disposal of wastewater of civil or industrial buildings. The joint (1) comprises a main seat (2), which is formed at one end of a first pipe or union (3) and accommodates a portion, proximate to one end, of a second pipe (4). A sealing gasket (5) is interposed in the main seat (2), between the lateral surface of the main seat (2) and the outer lateral surface of the portion of the second pipe (4) inserted in the main seat (2). The gasket (5) comprises a supporting part (6), which engages stably an engagement seat (7) formed on the lateral surface of the main seat (2), and a sealing part (8), which engages against the outer lateral surface of the portion of the second pipe (4) and/or against the surface of the main seat (2).

## Description

The present invention relates to a joint for watertight connection of pipes or unions in low-pressure hydraulic systems, particularly for lines for disposal of wastewater in civil or industrial buildings.

Lines or ducts for the disposal of wastewater of civil or industrial buildings are generally made of thermoplastic resins, such as high-density polyethylene or polypropylene or PVC (polyvinyl chloride).

In polyethylene lines, the joints are provided by butt-welding or by using a sleeve which incorporates an electric resistor, which can be activated in order to achieve the partial melting of the parts of the pipe or union inserted in the sleeve and of the sleeve proper.

In PVC ducts, the joints are provided by means of an insertion coupling with adhesive bonding of the sealing elements.

In polypropylene ducts, the joints are provided by means of an insertion coupling, in which the watertight seal is achieved by means of a gasket which is interposed between the two mated elements.

Insertion coupling is performed by providing, at one end of one of the two elements of the line or duct to be joined, a seat in which an end portion of the other element is inserted. This seat also accommodates the gasket, generally made of natural or synthetic rubber, which is designed to provide the watertight seal between the two elements. The gasket can be of the single-lip type, of the double-lip type, or toroidal (O-Ring).

The seat in which the gasket is accommodated, due to the fact that it has an undercut portion, is obtained by means of molds with retractable male plugs, by pull molding or by machining.

The use of machining to obtain the seat is limited to particular requirements for extremely limited production runs, since it has a very high cost.

The technique with molds having retractable male plugs entails having, in the mold that provides the end region of one of the two elements to be joined, an element known as retractable male plug, the geometry whereof can be changed so as to obtain, in a first more protruding arrangement, the gasket seat and, in a second arrangement, a reduced space occupation in order to allow its extraction from the molded part.

The result on the part molded with this technique is fully satisfactory, but the provision of a mold with retractable male plugs is complex and very expensive.

The pull-molding technique uses a mold provided with a male plug to obtain the gasket seat. Such male plug has a fixed geometry and the extraction of the male plug from the part after molding is achieved by utilizing the elastic deformability of the part proper.

With this technique, the gasket seat cannot have the same shape as the seat that can be obtained with the technique that uses molds having retractable male plugs, since in order to allow and facilitate the extraction of the male plug from the seat after molding it is necessary to provide a suitable mold extraction angle in the seat.

Because of this fact, gasket seats obtained with this technique generally use double-lip gaskets provided with a reinforcement ring, which during the assembly of the joint keeps the gasket in the seat more stably with respect to single-lip gaskets, which, in order to be retained within the respective seat require more precisely-made seats, indeed to prevent, during the assembly of the joint, the gasket from exiting from the corresponding seat and arranging itself abnormally, with the risk of a defective seal.

The aim of the present invention is to solve the problems described above by providing a joint for the watertight connection of pipes or unions or fittings in low-pressure hydraulic systems, particularly for lines for the disposal of wastewater of civil or industrial buildings, which is simple and economically competitive to manufacture and ensures an adequate hydraulic seal.

Within this aim, an object of the invention is to provide a joint that is capable of avoiding unwanted movements of the gasket during the assembly of the joint.

Another object of the invention is to provide a joint in which the gasket seat can be obtained with a molding technique that ensures high productivity and does not require molds that are excessively complicated to manufacture.

This aim and these and other objects, which will become better apparent hereinafter, are achieved by a joint for the watertight connection of pipes or unions in low-pressure hydraulic systems, particularly for lines for the disposal of wastewater of civil or industrial buildings, comprising a main seat, which is formed at one end of a first pipe or union and accommodates a portion, proximate to one end, of a second pipe; a sealing gasket being interposed in said main seat, between the lateral surface of said main seat and the outer lateral surface of said portion of the second pipe inserted in said main seat, characterized in that said gasket comprises a supporting part, which engages stably an engagement seat formed on the lateral surface of said main seat, and a sealing part, which engages against the outer lateral surface of said portion of the second pipe and/or against the surface of said main seat.

Further characteristics and advantages of the invention will become better apparent from the description of a preferred but not exclusive embodiment of the joint according to the invention, illustrated by way of non-limiting example in the accompanying drawings, wherein:

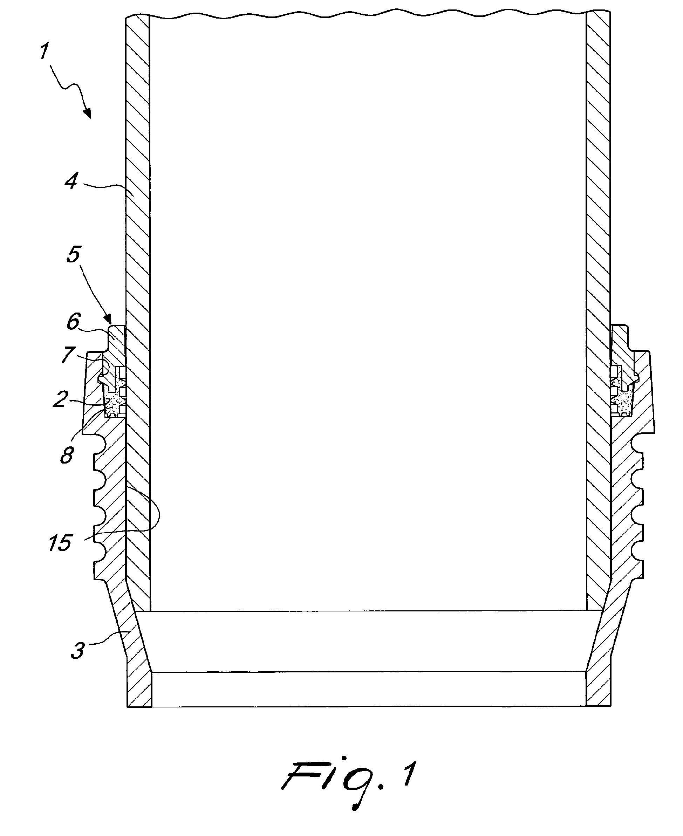

Figure 1 is an axial sectional view of a joint according to the invention;

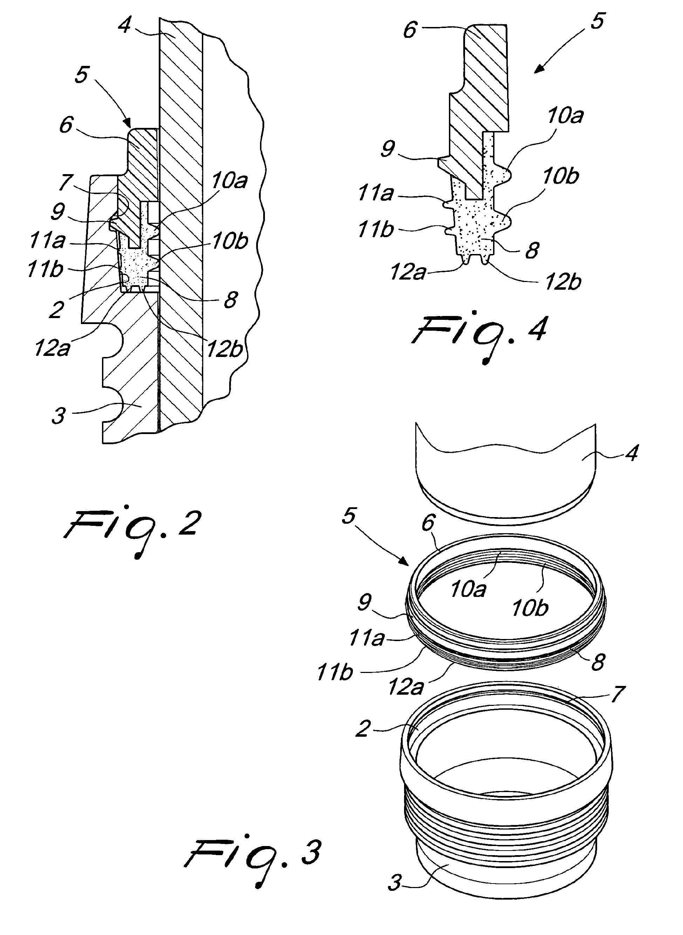

Figure 2 is an enlarged-scale view of a detail of Figure 1;
Figure 3 is an exploded perspective view of the joint according to the invention;
Figure 4 is a further enlarged axial sectional view of the gasket.

With reference to the figures, the joint according to the invention, generally designated by the reference numeral 1, comprises a main seat 2, which is formed at one end of a first pipe or union 3 and accommodates a portion, proximate to one end, of a second pipe 4.

A sealing gasket 5 is interposed in the main seat 2, between the lateral surface of the main seat 2 and the outer lateral surface of the portion of the second pipe 4 inserted in the main seat 2.

According to the invention, the gasket 5 comprises a supporting part 6, which engages stably an engagement seat 7 formed on the lateral surface of the main seat 2, and a sealing part 8, which engages against the outer lateral surface of the portion of the second pipe 4 that is inserted in the main seat 2 and/or against the surface of the main seat 2.

The sealing part 8 has a higher elastic deformability than the supporting part 6 and is preferably formed monolithically with said supporting part 6.

The main seat 2 is cup-shaped and the supporting part 6 of the gasket 5 is constituted by a ring, which surrounds the portion of the pipe 4 that is inserted in the main seat 2 and has, on its outer lateral surface, a circumferential protruding tooth 9, which can be coupled by snap action with the engagement seat 7.

The sealing part 8 protrudes coaxially with respect to the supporting part 6 from the axial end thereof that is directed toward the bottom of the main seat 2.

The supporting part 6 and the sealing part 8 are preferably made of molded synthetic material and are obtained monolithically by co-molding technique.

More particularly, the supporting part 6 is made of thermoplastic synthetic material, preferably polypropylene copolymer, while the sealing part 8 is made of partially vulcanized polyolefin-based thermoplastic rubber.

The sealing part 8 preferably has a hardness of substantially 55 Shore.

The diameter of the main seat 2 is larger than the outside diameter of the pipe 4 and of the remaining part 15, which is coaxial to the main seat 2, of the region of the first pipe or union 3 that receives the end portion of the pipe 4. The bottom of the main seat 2 is preferably flat and substantially perpendicular with respect to the axis of the main seat 2.

The lateral surface of the main seat 2 is preferably conical and tapers toward the bottom of the main seat 2 so as to facilitate the insertion of the gasket 5 within the main seat 2.

Conveniently, the sealing part 8 has, on its internal lateral surface, at least one circumferential protrusion 10a, 10b, which engages against the outer lateral surface of the end portion of the pipe 4 that is inserted in the main seat 2.

The sealing part 8 preferably has, on its outer lateral surface, at least one circumferential protrusion 11a, 11b, which engages against the lateral surface of the main seat 2.

Preferably, the sealing part 8 has, also on its end surface that is directed toward the bottom of the main seat 2, at least one protrusion 12a, 12b, which engages against the bottom of the main seat 2.

Advantageously, on the internal lateral surface, on the end surface directed toward the bottom of the main seat 2 and on the outer lateral surface of the sealing part 8, instead of a single protrusion there are pairs of protrusions arranged side by side, designated by the reference numerals 10a, 10b, 12a, 12b, 11a, 11b.

At least one of the protrusions formed on the internal lateral surface of the sealing part 8, in the illustrated case the protrusion designated by the reference numeral 10a, is provided on a portion of the sealing part 8 that lies on the internal lateral surface of the supporting part 6.

The assembly of the joint according to the invention is as follows.

The gasket 5 is positioned at the inlet of the main seat 2 so that its axial end provided with the protrusions 12a, 12b is directed toward the bottom of the main seat 2. The gasket 5 is then pushed into the main seat 2 toward the bottom of the main seat 2 until it engages with a snap action the tooth 9 inside the engagement seat 7.

The second pipe 4 is then inserted, by means of its end portion, in the end portion of the first pipe or union 3 in which the main seat 2 is formed, through the gasket 5.

In this manner, the gasket 5 engages against the outer lateral surface of the second pipe 4 by means of the protrusions 10a, 10b, against the lateral surface of the main seat 2 by means of the protrusions 11a, 11b, and against the bottom of the main seat 2 by means of the protrusions 12a, 12b, ensuring an excellent sealing effect for the joint thus assembled.

Owing to the fact that the gasket 5, during the insertion of the second pipe 4 in the first pipe or union 3, is engaged stably with its tooth 9 in the engagement seat 7, there is the assurance of precise positioning of the gasket 5, which is not altered by the insertion of the end portion of the second pipe 4 through the gasket 5.

It should be noted that the engagement seat 7 can be obtained with the pull-molding technique, achieving a high hourly production rate and low production and mold manufacturing costs.

In practice it has been found that the joint according to the invention fully achieves the intended aim, since it is easy to manufacture, economically competitive and ensures an excellent hydraulic seal among the connected elements.

Another advantage of the joint according to the invention is that it is extremely simple and easy to assemble and that it ensures high precision in the positioning of the gasket, which is not altered during assembly.

The joint thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

The disclosures in Italian Patent Application No. MI2005A001243 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A joint for the watertight connection of pipes or unions in low-pressure hydraulic systems, particularly for lines for the disposal of wastewater of civil or industrial buildings, comprising a main seat (2), which is formed at one end of a first pipe or union (3) and accommodates a portion, proximate to one end, of a second pipe (4); a sealing gasket (5) being interposed in said main seat (2), between the lateral surface of said main seat (2) and the outer lateral surface of said portion of the second pipe (4) inserted in said main seat (2), **characterized in that** said gasket (5) comprises a supporting part (6), which engages stably an engagement seat (7) formed on the lateral surface of said main seat (2), and a sealing part (8), which engages against the outer lateral surface of said portion of the second pipe (4) and/or against the surface of said main seat (2).

2. The joint according to claim 1, **characterized in that** said sealing part (8) has an higher elastic deformability than said supporting part (6).

3. The joint according to claims 1 and 2, **characterized in that** said sealing part (8) is formed monolithically with said supporting part (6).

4. The joint according to one or more of the preceding claims, **characterized in that** said main seat (2) is cup-shaped and **in that** said supporting part (6) is constituted by a ring which surrounds said portion of the second pipe (4) inserted in said main seat (2); said supporting part (6) having, on its outer lateral surface, a circumferentially protruding tooth (9) which can be coupled by snap action with said engagement seat (7).

5. The joint according to one or more of the preceding claims, **characterized in that** said sealing part (8) protrudes coaxially with respect to said supporting part (6) from the axial end thereof that is directed toward the bottom of said main seat (2).

6. The joint according to one or more of the preceding claims, **characterized in that** the bottom of said main seat (2) is flat and substantially perpendicular to the axis of said main seat (2).

7. The joint according to one or more of the preceding claims, **characterized in that** the lateral surface of said main seat (2) is conical and tapers toward the bottom of said main seat (2).

8. The joint according to one or more of the preceding claims, **characterized in that** said sealing part (8) has, on its internal lateral surface, at least one circumferential protrusion (10a, 10b), which engages against the outer lateral surface of said portion of the second pipe (4) that is inserted in said main seat (2).

9. The joint according to one or more of the preceding claims, **characterized in that** said sealing part (8) has, on its outer lateral surface, at least one circumferential protrusion (11 a, 11b), which engages against the lateral surface of said main seat (2).

10. The joint according to one or more of the preceding claims, **characterized in that** said sealing part (8) has, on its end surface directed toward the bottom of said main seat (2), at least one circumferential protrusion (12a, 12b), which engages against the bottom of said main seat (2).

11. The joint according to one or more of the preceding claims, **characterized in that** said at least one protrusion comprises a pair of protrusions (10a, 10b, 11 a, 11b, 12a, 12b) arranged side by side.

12. The joint according to one or more of the preceding claims, **characterized in that** a portion of said sealing part (8) that has at least one protrusion (10a) lies on the internal lateral surface of said supporting part (6).

13. The joint according to one or more of the preceding claims, **characterized in that** said supporting part (6) is made of thermoplastic synthetic material.

14. The joint according to one or more of the preceding claims, **characterized in that** said supporting part (6) is made of polypropylene copolymer.

15. The joint according to one or more of the preceding claims, **characterized in that** said sealing part (8) is made of partially vulcanized polyolefin-based thermoplastic rubber.

16. The joint according to one or more of the preceding claims, **characterized in that** said sealing part (8) and said supporting part (6) are co-molded.

17. A gasket (5) for a joint (1) for the watertight connection of pipes or unions (3) in low-pressure hydraulic systems, particularly for lines for conveying wastewater of civil or industrial buildings, according to one or more of the preceding claims.
